# EUROPEAN PATENT SPECIFICATION

(11) **EP 3 197 094 B1**
(45) Date of publication and mention of the grant of the patent: **24.08.2022**
(21) Application number: 14903951.3
(22) Date of filing: 14.10.2014
(51) Int. Cl.: G06F 8/65, H04L 41/00

(54) **SOFTWARE UPGRADING METHOD AND DEVICE**
VERFAHREN UND VORRICHTUNG ZUM AKTUALISIEREN VON SOFTWARE
PROCÉDÉ ET DISPOSITIF DE MISE À NIVEAU DE LOGICIEL

(43) Date of publication of application: 26.07.2017
(73) Proprietor: Huawei Technologies Co., Ltd., Shenzhen, Guangdong 518129 (CN)
(72) Inventor: FENG, Wenkang, Shenzhen Guangdong 518129 (CN); ZHANG, Kaibing, Shenzhen Guangdong 518129 (CN); SHUI, Xinchao, Shenzhen Guangdong 518129 (CN); WEN, Junbo, Shenzhen Guangdong 518129 (CN)
(74) Representative: Pfenning, Meinig & Partner mbB
(86) International application number: PCT/CN2014/088570
(87) International publication number: WO 2016/058133

(56) References cited:
- CN-A- 101 145 948
- CN-A- 101 447 884
- CN-U- 203 135 933
- US-A1- 2004 003 266
- US-A1- 2004 088 695
- US-A1- 2014 123 123

## Description

### TECHNICAL FIELD

The present invention relates to the field of communications technologies, and in particular, to a software upgrade method and a device.

### BACKGROUND

Due to its good mobility, a mobile terminal has been favored by an increasing quantity of people and has become an indispensable article for daily use in people's lives, and with development of communications technologies, a version of software that runs inside the mobile terminal is being continuously upgraded. To ensure that the version of the software inside the mobile terminal is a new version, the software in the mobile terminal needs to be upgraded and maintained.

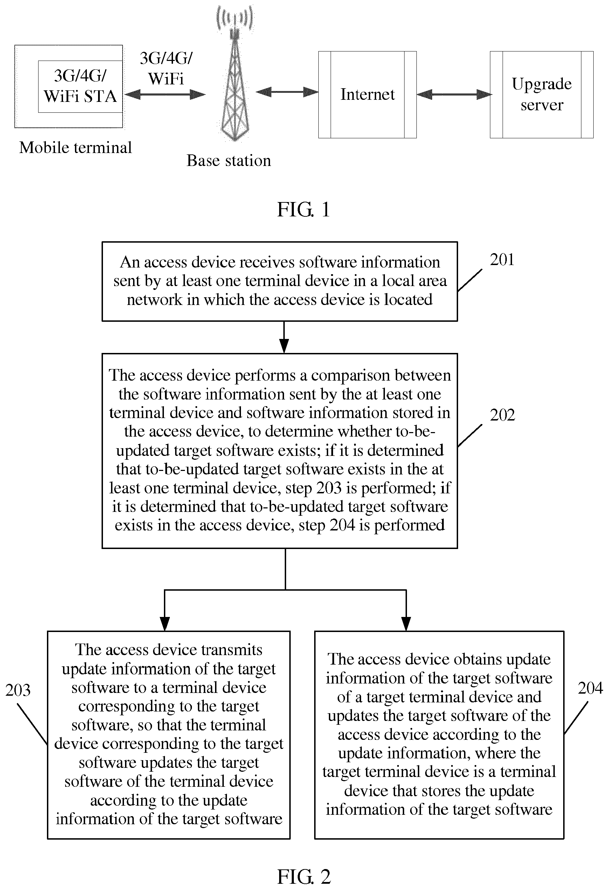

Currently, online upgrade of software in a mobile terminal is generally implemented in a system architecture shown in FIG. 1. Firstly, the mobile terminal accesses, by using a mobile communications network (such as the Internet), an upgrade server that stores a software package and detects whether a new version of upgrade software exits on the upgrade server. If it is determined that a new version of upgrade software exits on the upgrade server, an upgrade software package is downloaded from the upgrade server in a manner of Hyper Text Transfer Protocol (English: Hyper Text Transfer Protocol, HTTP for short) and software upgrade is performed. It can be learned that in the prior art a mobile terminal needs to access an upgrade server through the Internet and download a new software version to implement software upgrade. In this case, if multiple mobile terminals perform software upgrade at the same time, the multiple mobile terminals access the upgrade server through the Internet at the same time, which causes heavy network workload and increases load or burden of a network.

US2004/0003266 A1 discloses methods and systems for discovering software updates, for example by uploading the software update to an update computer which is not part of the network but which has access through the firewall and which is then used for distributing the update within the network.

US 2014/123123 A1 discloses propagation of software updates in a wireless network based on an "informed push" model, wherein nodes are given the software updates in response to a sequence of propagating reports on the need for the upgrade.

### SUMMARY

Embodiments of the present invention provide a software upgrade method and a device to resolve a problem in the prior art that a network is overloaded when multiple mobile terminals access an upgrade server through the Internet at the same time to perform software upgrade.

The present invention is defined according to the independent claims. Specific embodiments are defined in the dependent claims.

It can be learned from the foregoing description that, according to the software upgrade method and the device that are provided in the embodiments of the present invention, an access device receives software information sent by at least one terminal device in a local area network in which the access device is located, and performs a comparison between the software information sent by the at least one terminal device and software information stored in the access device, to determine whether to-be-updated target software exists; if it is determined that to-be-updated target software exists in the at least one terminal device, update information of the target software is transmitted to a terminal device corresponding to the target software, so that the terminal device corresponding to the target software updates the target software of the terminal device according to the update information of the target software; and if it is determined that to-be-updated target software exists in the access device, update information of the target software of a target terminal device is obtained and the target software of the access device is updated according to the update information, where the target terminal device is a terminal device that stores the update information of the target software. Therefore, software upgrade is performed for the terminal device by the access device that is located in the same local area network as the terminal device, so that the terminal device does not need to access an upgrade server through the Internet to implement software upgrade, which avoids access to the Internet when software of the terminal device is upgraded and reduces load or burden of a network.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an architecture diagram of a software upgrade system in the prior art;
FIG. 2 is a flowchart of a software upgrade method according to an embodiment of the present invention;
FIG. 3 is a schematic diagram of a first human-machine interaction interface according to an embodiment of the present invention;
FIG. 4 is a schematic diagram of a second human-machine interaction interface according to an embodiment of the present invention;
FIG. 5 is a structural diagram of an access device 50 according to an embodiment of the present invention; and
FIG. 6 is a structural diagram of an access device 60 according to an embodiment of the present invention.

### DESCRIPTION OF EMBODIMENTS

With reference to the accompanying drawings in the embodiments of the present invention, the following clearly and completely describes the technical solutions in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

FIG. 2 is a flowchart of a software upgrade method according to an embodiment of the present invention. As shown in FIG. 2, the method may include:
201. An access device receives software information sent by at least one terminal device in a local area network in which the access device is located.

The access device may be a device such as a wireless local area network (English: Wireless Fidelity, WiFi for short) hotspot, a wireless router, a smartphone, or a computer; a mobile terminal may be a device such as a smartphone or a computer.

Preferably, the access device may receive software information sent by the at least one mobile terminal by using a packet in any one of the following forms:
a Hyper Text Transfer Protocol (English: Hyper Text Transfer Protocol, HTTP for short) packet, a socket (Socket) packet, a Transmission Control Protocol (English: Transmission Control Protocol, TCP for short) packet, or a User Datagram Protocol (English: User Datagram Protocol, UDP for short) packet.

202. The access device performs a comparison between the software information sent by the at least one terminal device and software information stored in the access device, to determine whether to-be-updated target software exists; if it is determined that to-be-updated target software exists in the at least one terminal device, step 203 is performed; if it is determined that to-be-updated target software exists in the access device, step 204 is performed.

Preferably, to ensure software upgrade between devices of a same model, the software information may include: a device model and a software version.

Correspondingly, the performing a comparison between the software information sent by the at least one terminal device and software information stored in the access device, to determine whether to-be-updated target software exists may include:
performing, by the access device, a comparison between a device model in the software information sent by the terminal device and a device model in the software information stored in the access device;
if the device model in the software information is the same as the device model in the software information stored in the access device, performing a comparison between a software version in the software information of the at least one terminal device and a software version in the software information stored in the access device;
if the software version in the software information of the at least one terminal device is earlier than the software version in the software information stored in the access device, determining that to-be-updated target software exists in the at least one terminal device; and
if the software version in the software information stored in the access device is earlier than the software version in the software information of the at least one terminal device, determining that to-be-updated target software exists in the access device.

The device model may be a model of a device manufactured by a specific device manufacturer at a different stage, for example, the device model may be Huawei E5, or may be Apple iphone6S, or the like.

For example, if a device model in software information sent by a terminal device 1 is Huawei E5, and a sent software version is QQ2011, and the device model in the software information stored in the access device is E5, and the software version is QQ2014, it is determined, by means of comparison, that to-be-updated target software QQ exists in the terminal device 1. If the device model in the software information sent by the terminal device 1 is Huawei E5, and the sent software version is QQ2014, and the device model in the software information stored in the access device is E5, and the software version is QQ2013, it is determined, by means of comparison, that to-be-updated target software QQ exists in the access device.

It should be noted that the access device may store software information of multiple terminal devices. When the access device stores software information of multiple terminal devices, preferably, the foregoing method may be used to perform a comparison between the received software information sent by the at least one terminal device and multiple pieces of software information stored in the access device one by one, to determine whether to-be-updated target software exists.

203. The access device transmits update information of the target software to a terminal device corresponding to the target software, so that the terminal device corresponding to the target software updates the target software of the terminal device according to the update information of the target software.

Preferably, the transmitting update information of the target software to a terminal device corresponding to the target software, so that the terminal device corresponding to the target software updates the target software of the terminal device according to the update information of the target software may include:
sending prompt information to the at least one terminal device, where the prompt information is used to notify a user who uses the terminal device that the update information of the target software exists;
receiving a download request sent by the terminal device, where the download request is initiated by the user who uses the terminal device, and is used to request to download the update information of the target software;
obtaining the update information of the target software; and
sending the update information of the target software to the terminal device, so that the terminal device corresponding to the target software updates the target software of the terminal device according to the update information of the target software.

The access device may obtain the update information of the target software in an existing online upgrade manner, where the update information of the target software is pre-stored in the access device. Latest information of the target software may further be obtained from another terminal device in the local area network, where the another terminal device is a device that includes the update information of the target software, and the access device stores software information of target software in the another terminal device.

204. The access device obtains update information of the target software of a target terminal device and updates the target software of the access device according to the update information, where the target terminal device is a terminal device that stores the update information of the target software.

Preferably, the obtaining update information of the target software of a target terminal device may include:
displaying, by the access device, a first prompt message on a first human-machine interaction interface of the access device, where the first prompt message is used to prompt a user who uses the access device that to-be-updated target software exists;
receiving a download request that is entered by the user by using the first human-machine interaction interface;
sending the download request to the target terminal device, where the download request is used to request to download update information of the target software; and
obtaining the update information of the target software sent by the target terminal.

The access device may automatically display the first prompt message on a human-machine interaction interface of the access device, or may display the first prompt message on a human-machine interaction interface of the access device at a preset moment, which is not limited in this embodiment of the present invention.

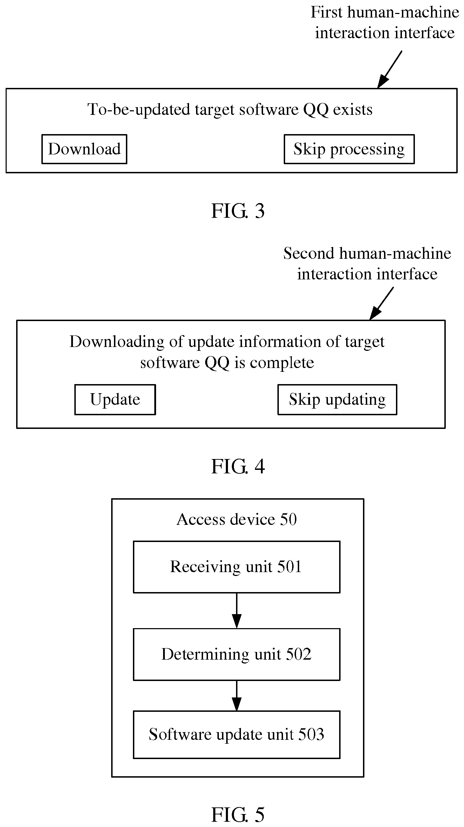

For example, in this embodiment of the present invention, the first prompt message may be displayed on a human-machine interaction interface shown in FIG. 3. After the interface displays the first prompt message, a user may tap a download button according to a personal need to send a download request, or may tap an ignore button to ignore the prompt message, that is, update information of the target software is not downloaded.

Preferably, after receiving the update information of the target software, the access device may automatically update the target software in the access device according to the update information of the target software. The target software in the access device may also be updated by using the following method:
displaying a second prompt message on a second human-machine interaction interface of the access device, where the second prompt message is used to prompt a user who uses the access device that downloading of the update information of the target software is complete;
receiving an update instruction that is entered by the user by using the second human-machine interaction interface; and
updating the target software in the access device.

For example, FIG. 4 is a schematic diagram of a second human-machine interaction interface according to an embodiment of the present invention. After the interface displays the second prompt message, a user may tap an update button according to a requirement to send an update instruction, so as to implement update and upgrade of target software, or may tap a skip updating button so that the access device automatically saves update information of the target software and performs software update at a preset moment.

Further, in this embodiment of the present invention, the access device communicates with the terminal device by means of WiFi, a network port, Bluetooth, and infrared.

It can be learned from the foregoing description that, according to the software upgrade method provided in this embodiment of the present invention, an access device receives software information sent by at least one terminal device in a local area network in which the access device is located, and performs a comparison between the software information sent by the at least one terminal device and software information stored in the access device, to determine whether to-be-updated target software exists; if it is determined that to-be-updated target software exists in the at least one terminal device, update information of the target software is transmitted to a terminal device corresponding to the target software, so that the terminal device corresponding to the target software updates the target software of the terminal device according to the update information of the target software; and if it is determined that to-be-updated target software exists in the access device, update information of the target software of a target terminal device is obtained and the target software of the access device is updated according to the update information, where the target terminal device is a terminal device that stores the update information of the target software. Therefore, software upgrade is performed for the terminal device by the access device that is located in the same local area network as the terminal device, so that the terminal device does not need to access an upgrade server through the Internet to implement software upgrade, which avoids access to the Internet when software of the terminal device is upgraded and reduces load or burden of a network.

### Embodiment 2

FIG. 5 is a structural diagram of an access device 50 according to an embodiment of the present invention. As shown in FIG. 5, the access device 50 may include:
a receiving unit 501, configured to receive software information sent by at least one terminal device in a local area network in which the access device is located;
a determining unit 502, configured to perform a comparison between the software information sent by the at least one terminal device and software information stored in the access device, to determine whether to-be-updated target software exists; and
a software update unit 503, configured to: if it is determined that to-be-updated target software exists in the at least one terminal device, transmit update information of the target software to a terminal device corresponding to the target software, so that the terminal device corresponding to the target software updates the target software of the terminal device according to the update information of the target software; and
if it is determined that to-be-updated target software exists in the access device, obtain update information of the target software of a target terminal device and update the target software of the access device according to the update information, where the target terminal device is a terminal device that stores the update information of the target software.

Further, the access unit 501 is specifically configured to receive software information sent by the at least one mobile terminal by using a packet in any one of the following forms:
an HTTP packet, a Socket packet, a TCP packet, or a UDP packet.

Further, the software information may include: a device model and a software version. The determining unit 502 is specifically configured to: perform a comparison between a device model in the software information sent by the terminal device and a device model in the software information stored in the access device;
if the device model in the software information is the same as the device model in the software information stored in the access device, perform a comparison between a software version in the software information of the at least one terminal device and a software version in the software information stored in the access device;
if the software version in the software information of the at least one terminal device is earlier than the software version in the software information stored in the access device, determine that to-be-updated target software exists in the at least one terminal device; and
if the software version in the software information stored in the access device is earlier than the software version in the software information of the at least one terminal device, determine that to-be-updated target software exists in the access device.

The device model may be a model of a device manufactured by a specific device manufacturer at a different stage, for example, the device model may be Huawei E5, or may be Apple iphone6S, or the like.

Further, when the determining unit 502 determines that to-be-updated target software exists in the at least one terminal device, the software update unit 503 is specifically configured to:
send prompt information to the at least one terminal device, where the prompt information is used to notify a user who uses the terminal device that the update information of the target software exists;
receive a download request sent by the terminal device, where the download request is initiated by the user who uses the terminal device, and is used to request to download the update information of the target software;
obtain the update information of the target software; and
send the update information of the target software to the terminal device, so that the terminal device corresponding to the target software updates the target software of the terminal device according to the update information of the target software.

Further, when the determining unit 502 determines that to-be-updated target software exists in the access device, the software update unit 503 is specifically configured to:
display a first prompt message on a first human-machine interaction interface of the access device, where the first prompt message is used to prompt a user who uses the access device that to-be-updated target software exists;
receive a download request that is entered by the user by using the first human-machine interaction interface;
send the download request to the target terminal device, where the download request is used to request to download update information of the target software; and
obtain the update information of the target software sent by the target terminal.

The software update unit 503 may automatically display the first prompt message on a human-machine interaction interface of the access device, or may display the first prompt message on a human-machine interaction interface of the access device at a preset moment, which is not limited in this embodiment of the present invention.

For example, in this embodiment of the present invention, the first prompt message may be displayed on a human-machine interaction interface shown in FIG. 3. After the interface displays the first prompt message, a user may tap a download button according to a personal need to send a download request, or may tap an ignore button to ignore the prompt message, that is, update information of the target software is not downloaded.

Further, after the software update unit 503 obtains the update information of the target software, the software update unit 503 may be configured to automatically update the target software in the access device according to the update information of the target software, and may be further configured to:
display a second prompt message on a second human-machine interaction interface of the access device, where the second prompt message is used to prompt a user who uses the access device that downloading of the update information of the target software is complete;
receive an update instruction that is entered by the user by using the second human-machine interaction interface; and
update the target software in the access device.

For example, FIG. 4 is a schematic diagram of a second human-machine interaction interface according to an embodiment of the present invention. After the interface displays the second prompt message, a user may tap an update button according to a requirement to send an update instruction, so as to implement update and upgrade of target software, or may tap a skip updating button so that the access device automatically saves update information of the target software and performs software update at a preset moment.

It can be learned from the foregoing description that, the access device 50 provided in this embodiment of the present invention receives software information sent by at least one terminal device in a local area network in which the access device is located, and performs a comparison between the software information sent by the at least one terminal device and software information stored in the access device, to determine whether to-be-updated target software exists; if it is determined that to-be-updated target software exists in the at least one terminal device, update information of the target software is transmitted to a terminal device corresponding to the target software, so that the terminal device corresponding to the target software updates the target software of the terminal device according to the update information of the target software; and if it is determined that to-be-updated target software exists in the access device, update information of the target software of a target terminal device is obtained and the target software of the access device is updated according to the update information, where the target terminal device is a terminal device that stores the update information of the target software. Therefore, software upgrade is performed for the terminal device by the access device that is located in the same local area network as the terminal device, so that the terminal device does not need to access an upgrade server through the Internet to implement software upgrade, which avoids access to the Internet when software of the terminal device is upgraded and reduces load or burden of a network.

### Embodiment 3

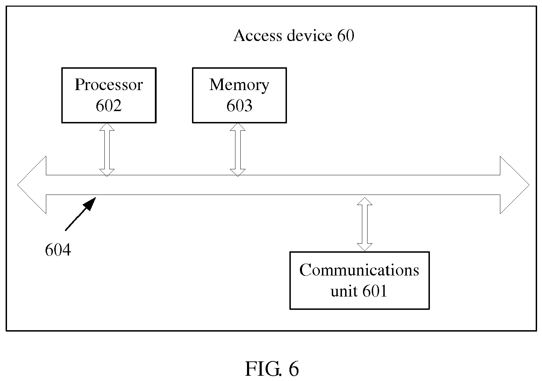

FIG. 6 is a structural diagram of a receiving device 60 according to an embodiment of the present invention. As shown in FIG. 6, the access device 60 may include: a communications unit 601, a processor 602, a memory 603, and at least one communications bus 604, configured to implement connection and mutual communication between the apparatuses.

The communications unit 601 is configured to perform data transmission with external network elements.

The processor 602 may be a central processing unit (English: central processing unit, CPU for short).

The memory 603 may be a volatile memory (English: volatile memory) such as a random-access memory (English: random-access memory, RAM for short) or a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short), or a combination of the foregoing types of memories. The memory 603 is configured to provide an instruction and data including software information to the processor 602.

The communications unit 601 is configured to receive software information sent by at least one terminal device in a local area network in which the access device is located.

The processor 602 is configured to: perform a comparison between the software information sent by the at least one terminal device and software information stored in the access device, to determine whether to-be-updated target software exists;
if it is determined that to-be-updated target software exists in the at least one terminal device, transmit update information of the target software to a terminal device corresponding to the target software, so that the terminal device corresponding to the target software updates the target software of the terminal device according to the update information of the target software; and
if it is determined that to-be-updated target software exists in the access device, obtain update information of the target software of a target terminal device and update the target software of the access device according to the update information, where the target terminal device is a terminal device that stores the update information of the target software.

Further, the communications unit 601 is specifically configured to receive software information sent by the at least one mobile terminal by using a packet in any one of the following forms:
an HTTP packet, a Socket packet, a TCP packet, or a UDP packet.

Further, the software information may include: a device model and a software version. The processor 602 is specifically configured to: perform a comparison between a device model in the software information sent by the terminal device and a device model in the software information stored in the access device;
if the device model in the software information is the same as the device model in the software information stored in the access device, perform a comparison between a software version in the software information of the at least one terminal device and a software version in the software information stored in the access device;
if the software version in the software information of the at least one terminal device is earlier than the software version in the software information stored in the access device, determine that to-be-updated target software exists in the at least one terminal device; and
if the software version in the software information stored in the access device is earlier than the software version in the software information of the at least one terminal device, determine that to-be-updated target software exists in the access device.

The device model may be a model of a device manufactured by a specific device manufacturer at a different stage, for example, the device model may be Huawei E5, or may be Apple iphone6S, or the like.

Further, when the processor 602 determines that to-be-updated target software exists in the at least one terminal device, the processor 602 is specifically configured to:
send prompt information to the at least one terminal device, where the prompt information is used to notify a user who uses the terminal device that the update information of the target software exists;
receive a download request sent by the terminal device, where the download request is initiated by the user who uses the terminal device, and is used to request to download the update information of the target software;
obtain the update information of the target software; and
send the update information of the target software to the terminal device, so that the terminal device corresponding to the target software updates the target software of the terminal device according to the update information of the target software.

Further, when the processor 602 determines that to-be-updated target software exists in the access device, the processor 602 is specifically configured to:
display a first prompt message on a first human-machine interaction interface of the access device, where the first prompt message is used to prompt a user who uses the access device that to-be-updated target software exists;
receive a download request that is entered by the user by using the first human-machine interaction interface;
send the download request to the target terminal device, where the download request is used to request to download update information of the target software; and
obtain the update information of the target software sent by the target terminal.

The processor 602 may automatically display the first prompt message on a human-machine interaction interface of the access device, or may display the first prompt message on a human-machine interaction interface of the access device at a preset moment, which is not limited in this embodiment of the present invention.

For example, in this embodiment of the present invention, the first prompt message may be displayed on a human-machine interaction interface shown in FIG. 3. After the interface displays the first prompt message, a user may tap a download button according to a personal need to send a download request, or may tap an ignore button to ignore the prompt message, that is, update information of the target software is not downloaded.

Further, after the processor 602 obtains the update information of the target software, the processor 602 may be configured to automatically update the target software in the access device according to the update information of the target software, and may be further configured to:
display a second prompt message on a second human-machine interaction interface of the access device, where the second prompt message is used to prompt a user who uses the access device that downloading of the update information of the target software is complete;
receive an update instruction that is entered by the user by using the second human-machine interaction interface; and
update the target software in the access device.

For example, FIG. 4 is a schematic diagram of a second human-machine interaction interface according to an embodiment of the present invention. After the interface displays the second prompt message, a user may tap an update button according to a requirement to send an update instruction, so as to implement update and upgrade of target software, or may tap a skip updating button so that the access device automatically saves update information of the target software and performs software update at a preset moment.

It can be learned from the foregoing description that, the access device 60 provided in this embodiment of the present invention receives software information sent by at least one terminal device in a local area network in which the access device is located, and performs a comparison between the software information sent by the at least one terminal device and software information stored in the access device, to determine whether to-be-updated target software exists; if it is determined that to-be-updated target software exists in the at least one terminal device, update information of the target software is transmitted to a terminal device corresponding to the target software, so that the terminal device corresponding to the target software updates the target software of the terminal device according to the update information of the target software; and if it is determined that to-be-updated target software exists in the access device, update information of the target software of a target terminal device is obtained and the target software of the access device is updated according to the update information, where the target terminal device is a terminal device that stores the update information of the target software. Therefore, software upgrade is performed for the terminal device by the access device that is located in the same local area network as the terminal device, so that the terminal device does not need to access an upgrade server through the Internet to implement software upgrade, which avoids access to the Internet when software of the terminal device is upgraded and reduces load or burden of a network.

In the several embodiments provided in the present application, it should be understood that the disclosed system, mobile terminal, and method may be implemented in other manners. For example, the described mobile terminal embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections of the mobile terminal or a unit may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

## Claims

1. A software upgrade method, wherein the method comprises:
receiving, by an access device, software information sent by a plurality of terminal devices in a local area network in which the access device is located (Step 201); wherein the terminal devices are mobile terminal devices;
performing, by the access device, a comparison between the software information sent by a terminal device of the plurality of terminal devices and software information stored in the access device, to determine whether to-be-updated target software exists (Step 202);
if it is determined that to-be-updated target software exists in the access device, obtaining update information of the target software of a target terminal device and updating the target software of the access device according to the update information, wherein the target terminal device is a device of the plurality of terminal devices that stores the update information of the target software (Step 204);
**characterized in that**
if it is determined that to-be-updated target software exists in the terminal device, transmitting, by the access device, update information of the target software to an other terminal device of the plurality of terminal devices, so that the other terminal device updates the target software of the terminal device according to the update information of the target software (Step 203).

2. The software upgrade method according to claim 1, wherein the software information comprises: a device model and a software version.

3. The software upgrade method according to claim 2, wherein the performing, by the access device, a comparison between the software information sent by the terminal device and software information stored in the access device, to determine whether to-be-updated target software exists comprises:
performing, by the access device, a comparison between a device model in the software information sent by the terminal device and a device model in the software information stored in the access device;
if the device model in the software information is the same as the device model in the software information stored in the access device, performing a comparison between a software version in the software information of the terminal device and a software version in the software information stored in the access device;
if the software version in the software information of the at least one terminal device is earlier than the software version in the software information stored in the access device, determining that to-be-updated target software exists in the terminal device; and
if the software version in the software information stored in the access device is earlier than the software version in the software information of the terminal device, determining that to-be-updated target software exists in the access device.

4. The software upgrade method according to any one of claims 1 to 3, wherein:
the access device communicates with the terminal device by means of WiFi, a network port, Bluetooth, and infrared.

5. An access device (50), comprising:
a receiving unit (501), configured to receive software information sent by a plurality of terminal devices in a local area network in which the access device is located; wherein the terminal devices are mobile terminal devices;
a determining unit (502), configured to perform a comparison between the software information sent by a terminal device of the plurality of terminal devices and software information stored in the access device, to determine whether to-be-updated target software exists; and
a software update unit (503), configured to:
if it is determined that to-be-updated target software exists in the access device, obtain update information of the target software of a target terminal device of the at least one terminal device and update the target software of the access device according to the update information, wherein the target terminal device is a device of the plurality of terminal devices that stores the update information of the target software;
**characterized in that** the software update unit (503) is further configured to: if it is determined that to-be-updated target software exists in the at least one terminal device, transmit update information of the target software to an other terminal device, so that the other terminal device updates the target software of the terminal device according to the update information of the target software.

6. The access device according to claim 5, wherein the software information comprises: a device model and a software version.

7. The access device according to claim 6, wherein the determining unit is specifically configured to:
perform a comparison between a device model in the software information sent by the terminal device and a device model in the software information stored in the access device;
if the device model in the software information is the same as the device model in the software information stored in the access device, perform a comparison between a software version in the software information of the terminal device and a software version in the software information stored in the access device;
if the software version in the software information of the terminal device is earlier than the software version in the software information stored in the access device, determine that to-be-updated target software exists in the terminal device; and
if the software version in the software information stored in the access device is earlier than the software version in the software information of the terminal device, determine that to-be-updated target software exists in the access device.

## Patentansprüche

1. Software-"Upgrade"-Verfahren, wobei das Verfahren Folgendes umfasst:
Empfangen von Software-Informationen durch ein Zugangsgerät, die von mehreren Endgeräten in einem lokalen Netzwerk gesendet werden, in dem sich das Zugangsgerät befindet, (Schritt (201), wobei die Endgeräte mobile Endgeräte sind, Durchführen eines Vergleichs zwischen den Software-Informationen, die von einem Endgerät der mehreren Endgeräte gesendet werden, und Software-Informationen, die in dem Zugangsgerät gespeichert sind, durch das Zugangsgerät, um zu bestimmen, ob zu aktualisierende Ziel-Software vorhanden ist (Schritt 202),
wenn bestimmt wird, dass in dem Zugangsgerät zu aktualisierende Ziel-Software vorhanden ist, Beziehen von Aktualisierungsinformationen der Ziel-Software eines Zielendgeräts und Aktualisieren der Ziel-Software des Zugangsgeräts gemäß den Aktualisierungsinformationen, wobei das Zielendgerät ein Gerät der mehreren Endgeräte ist, das die Aktualisierungsinformationen der Ziel-Software speichert (Schritt 204),
**dadurch gekennzeichnet, dass**,
wenn bestimmt wird, dass in dem Endgerät zu aktualisierende Ziel-Software vorhanden ist, Übertragen von Aktualisierungsinformationen der Ziel-Software an ein anderes Endgerät der mehreren Endgeräte durch das Zugangsgerät derart, dass das andere Endgerät die Ziel-Software des Endgeräts gemäß den Aktualisierungsinformationen der Ziel-Software aktualisiert (Schritt 203).

2. Software-"Upgrade"-Verfahren nach Anspruch 1, wobei die Software-Informationen Folgendes umfassen: ein Gerätemodell und eine Software-Version.

3. Software-"Upgrade"-Verfahren nach Anspruch 2, wobei das Durchführen eines Vergleichs zwischen den Software-Informationen, die von dem Endgerät gesendet werden, und Software-Informationen, die in dem Zugangsgerät gespeichert sind, durch das Zugangsgerät, um zu bestimmen, ob zu aktualisierende Ziel-Software vorhanden ist, Folgendes umfasst:
Durchführen eines Vergleichs zwischen einem Gerätemodell in den Software-Informationen, die von dem Endgerät gesendet werden, und einem Gerätemodell in den Software-Informationen, die in dem Zugangsgerät gespeichert sind, durch das Zugangsgerät,
wenn das Gerätemodell in den Software-Informationen gleich dem Gerätemodell in den Software-Informationen ist, die in dem Zugangsgerät gespeichert sind,
Durchführen eines Vergleichs zwischen einer Software-Version in den Software-Informationen des Endgeräts und einer Software-Version in den Software-Informationen, die in dem Zugangsgerät gespeichert sind,
wenn die Software-Version in den Software-Informationen des mindestens einen Endgeräts älter ist als die Software-Version in den Software-Informationen, die in dem Zugangsgerät gespeichert sind, Bestimmen, dass in dem Endgerät zu aktualisierende Ziel-Software vorhanden ist, und
wenn die Software-Version in den Software-Informationen, die in dem Zugangsgerät gespeichert sind, älter ist als die Software-Version in den Software-Informationen des Endgeräts, Bestimmen, dass in dem Zugangsgerät zu aktualisierende Ziel-Software vorhanden ist.

4. Software-"Upgrade"-Verfahren nach einem der Ansprüche 1 bis 3, wobei:
das Zugangsgerät mit dem Endgerät mittels WiFi, eines Netzwerkanschlusses, Bluetooth und Infrarot kommuniziert.

5. Zugangsgerät (50), Folgendes umfassend:
eine Empfangseinheit (501), die dafür konfiguriert ist, Software-Informationen zu empfangen, die von mehreren Endgeräten in einem lokalen Netzwerk gesendet werden, in dem sich das Zugangsgerät befindet, wobei die Endgeräte mobile Endgeräte sind,
eine Bestimmungseinheit (502), die dafür konfiguriert ist, einen Vergleich zwischen den Software-Informationen, die von einem Endgerät der mehreren Endgeräte gesendet werden, und Software-Informationen, die in dem Zugangsgerät gespeichert sind, durchzuführen, um zu bestimmen, ob zu aktualisierende Ziel-Software vorhanden ist, und
eine Software-Aktualisierungseinheit (503), die für Folgendes konfiguriert ist:
wenn bestimmt wird, dass zu aktualisierende Ziel-Software in dem Zugangsgerät vorhanden ist, Beziehen von Aktualisierungsinformationen der Ziel-Software eines Zielendgeräts des mindestens einen Endgeräts und Aktualisieren der Ziel-Software des Zugangsgeräts gemäß den Aktualisierungsinformationen, wobei das Zielendgerät ein Gerät der mehreren Endgeräte ist, das die Aktualisierungsinformationen der Ziel-Software speichert,
**dadurch gekennzeichnet, dass** die Software-Aktualisierungseinheit (503) ferner für Folgendes konfiguriert ist: wenn bestimmt wird, dass in dem mindestens einen Endgerät zu aktualisierende Ziel-Software vorhanden ist, Übertragen von Aktualisierungsinformationen der Ziel-Software an ein anderes Endgerät derart, dass das andere Endgerät die Ziel-Software des Endgeräts gemäß den Aktualisierungsinformationen der Ziel-Software aktualisiert.

6. Zugangsgerät nach Anspruch 5, wobei die Software-Informationen ein Gerätemodell und eine Software-Version umfassen.

7. Zugangsgerät nach Anspruch 6, wobei die Bestimmungseinheit speziell für Folgendes konfiguriert ist:
Durchführen eines Vergleichs zwischen einem Gerätemodell in den Software-Informationen, die von dem Endgerät gesendet werden, und einem Gerätemodell in den Software-Informationen, die in dem Zugangsgerät gespeichert sind,
wenn das Gerätemodell in den Software-Informationen gleich dem Gerätemodell in den Software-Informationen ist, die in dem Zugangsgerät gespeichert sind,
Durchführen eines Vergleichs zwischen einer Software-Version in den Software-Informationen des Endgeräts und einer Software-Version in den Software-Informationen, die in dem Zugangsgerät gespeichert sind,
wenn die Software-Version in den Software-Informationen des Endgeräts älter ist als die Software-Version in den Software-Informationen, die in dem Zugangsgerät gespeichert sind, Bestimmen, dass in dem Endgerät zu aktualisierende Ziel-Software vorhanden ist, und
wenn die Software-Version in den Software-Informationen, die in dem Zugangsgerät gespeichert sind, älter ist als die Software-Version in den Software-Informationen des mindestens einen Endgeräts, Bestimmen, dass in dem Zugangsgerät zu aktualisierende Ziel-Software vorhanden ist.

## Revendications

1. Procédé de mise à jour de logiciel, le procédé comprenant :
la réception, par un dispositif d'accès, d'informations de logiciel envoyées par une pluralité de dispositifs terminaux dans un réseau local dans lequel le dispositif d'accès est situé (Étape 201) ; les dispositifs terminaux étant des dispositifs terminaux mobiles ;
l'exécution, par le dispositif d'accès, d'une comparaison entre les informations de logiciel envoyées par un dispositif terminal de la pluralité de dispositifs terminaux et les informations de logiciel stockées dans le dispositif d'accès, afin de déterminer si le logiciel cible devant être mis à jour existe ou pas (Étape 202) ;
s'il est déterminé que le logiciel cible devant être mis à jour existe dans le dispositif d'accès, l'obtention d'informations de mise à jour du logiciel cible d'un dispositif terminal cible et la mise à jour du logiciel cible du dispositif d'accès conformément aux informations de mise à jour, le dispositif terminal cible étant un dispositif parmi la pluralité de dispositifs terminaux qui stocke les informations de mise à jour du logiciel cible (Étape 204) ;
**caractérisé en ce que**
s'il est déterminé que le logiciel cible devant être mis à jour existe dans le dispositif terminal, la transmission, par le dispositif d'accès, d'informations de mise à jour du logiciel cible à un autre dispositif terminal parmi la pluralité de dispositifs terminaux de manière à ce que l'autre dispositif terminal mette à jour le logiciel cible du dispositif terminal conformément aux informations de mise à jour du logiciel cible (Étape 203).

2. Procédé de mise à jour de logiciel selon la revendication 1, dans lequel les informations de logiciel comprennent : un modèle de dispositif et une version de logiciel.

3. Procédé de mise à jour de logiciel selon la revendication 2, dans lequel l'exécution, par le dispositif d'accès, d'une comparaison entre les informations de logiciel envoyées par le dispositif terminal et les informations de logiciel stockées dans le dispositif d'accès, afin de déterminer si le logiciel cible devant être mis à jour existe ou pas comprend :
l'exécution, par le dispositif d'accès, d'une comparaison entre un modèle de dispositif dans les informations de logiciel envoyées par le dispositif terminal et un modèle de dispositif dans les informations de logiciel stockées dans le dispositif d'accès ;
si le modèle de dispositif dans les informations de logiciel est le même que le modèle de dispositif dans les informations de logiciel stockées dans le dispositif d'accès,
l'exécution d'une comparaison entre une version de logiciel dans les informations de logiciel du dispositif terminal et une version de logiciel dans les informations de logiciel stockées dans le dispositif d'accès ;
si la version de logiciel dans les informations de logiciel de l'au moins un dispositif terminal est plus ancienne que la version de logiciel dans les informations de logiciel stockées dans le dispositif d'accès, la détermination que le logiciel cible devant être mis à jour existe dans le dispositif terminal ; et
si la version de logiciel dans les informations de logiciel stockées dans le dispositif d'accès est plus ancienne que la version de logiciel dans les informations de logiciel du dispositif terminal, la détermination que le logiciel cible devant être mis à jour existe dans le dispositif d'accès.

4. Procédé de mise à jour de logiciel selon l'une quelconque des revendications 1 à 3, dans lequel :
le dispositif d'accès communique avec le dispositif terminal au moyen de WiFi, d'un point d'accès de réseau, de Bluetooth et de lumière infrarouge.

5. Dispositif d'accès (50), comprenant :
une unité de réception (501), configurée de façon à recevoir des informations de logiciel envoyées par une pluralité de dispositifs terminaux dans un réseau local dans lequel le dispositif d'accès est situé ; les dispositifs terminaux étant des dispositifs terminaux mobiles ;
une unité de détermination (502), configurée de façon à exécuter une comparaison entre les informations de logiciel envoyées par un dispositif terminal parmi la pluralité de dispositifs terminaux et les informations de logiciel stockées dans le dispositif d'accès, afin de déterminer si le logiciel cible devant être mis à jour existe ou pas ; et
une unité de mise à jour de logiciel (503), configurée de façon à :
s'il est déterminé que le logiciel cible devant être mis à jour existe dans le dispositif d'accès, obtenir des informations de mise à jour du logiciel cible d'un dispositif terminal cible de l'au moins un dispositif terminal et mettre à jour le logiciel cible du dispositif d'accès conformément aux informations de mise à jour, le dispositif terminal cible étant un dispositif parmi la pluralité de dispositifs terminaux qui stocke les informations de mise à jour du logiciel cible ;
**caractérisé en ce que** l'unité de mise à jour de logiciel (503) est configurée en outre de façon à : s'il est déterminé que le logiciel cible devant être mis à jour existe dans l'au moins un dispositif terminal, transmettre des informations de mise à jour du logiciel cible à un autre dispositif terminal, de manière à ce que l'autre dispositif terminal mette à jour le logiciel cible du dispositif terminal conformément aux informations de mise à jour du logiciel cible.

6. Dispositif d'accès selon la revendication 5, dans lequel les informations de logiciel comprennent : un modèle de dispositif et une version de logiciel.

7. Dispositif d'accès selon la revendication 6, dans lequel l'unité de détermination est configurée spécifiquement de façon à :
exécuter une comparaison entre un modèle de dispositif dans les informations de logiciel envoyées par le dispositif terminal et un modèle de dispositif dans les informations de logiciel stockées dans le dispositif d'accès ;
si le modèle de dispositif dans les informations de logiciel est le même que le modèle de dispositif dans les informations de logiciel stockées dans le dispositif d'accès, exécuter une comparaison entre une version de logiciel dans les informations de logiciel du dispositif terminal et une version de logiciel dans les informations de logiciel stockées dans le dispositif d'accès ;
si la version de logiciel dans les informations de logiciel du dispositif terminal est plus ancienne que la version de logiciel dans les informations de logiciel stockées dans le dispositif d'accès, déterminer que le logiciel cible devant être mis à jour existe dans le dispositif terminal ; et
si la version de logiciel dans les informations de logiciel stockées dans le dispositif d'accès est plus ancienne que la version de logiciel dans les informations de logiciel du dispositif terminal, déterminer que le logiciel cible devant être mis à jour existe dans le dispositif d'accès.
